# EUROPEAN PATENT SPECIFICATION

(11) **EP 3 887 864 B1**
(45) Date of publication and mention of the grant of the patent: **29.06.2022**
(21) Application number: 19828566.0
(22) Date of filing: 21.11.2019
(51) Int. Cl.: G01T 1/16

(54) **HYBRID X-RAY AND OPTICAL DETECTOR**
HYBRIDER RÖNTGEN- UND OPTISCHER DETEKTOR
DÉTECTEUR OPTIQUE ET À RAYONS X HYBRIDE

(30) Priority: 29.11.2018 EP 18209079
(43) Date of publication of application: 06.10.2021
(73) Proprietor: Koninklijke Philips N.V., 5656 AG Eindhoven (NL)
(72) Inventor: JACOBS, Johannes, Wilhelmus, Maria, 5656 AE Eindhoven (NL); HOFSINK, Robert, Derk, Jan, Hendrik, 5656 AE Eindhoven (NL); HENDRIKS, Bernardus, 5656 AE Eindhoven (NL); HOLTHUIZEN, Ronaldus, Frederik, Johannes, 5656 AE Eindhoven (NL); RUETTEN, Walter, 5656 AE Eindhoven (NL)
(74) Representative: Philips Intellectual Property & Standards
(86) International application number: PCT/EP2019/082004
(87) International publication number: WO 2020/109120

(56) References cited:
- EP-A1- 1 715 361
- WO-A1-2016/131647
- WO-A2-2012/107870
- US-A1- 2007 238 957

## Description

### FIELD OF THE INVENTION

The present invention relates to an imaging detector, in particular the present invention relates to an imaging detector for capturing optical imaging data and X-ray imaging data, to an imaging system and to a method for fabricating an imaging detector.

### BACKGROUND OF THE INVENTION

The integration of optical imaging in X-ray imaging system can provide valuable functional information in various medical and non-medical applications. In medical applications, for example, such dual-imaging systems are mostly built in a gantry in which separate optical and X-ray image acquisition channels are mechanically combined, and acquired images are co-registered and fused together. Since the X-ray and optical images are not acquired at the same time and place, this imaging concept often results in imaging inaccuracies and imaging artefacts resulting from differences in acquisition time and patient movement. This problem may be solved by a hybrid X-ray and optical detector. Current hybrid X-ray and optical detectors may have limited optical functionalities and complex interconnections between numerous optical sensor segments.
For example, WO 2016/131647 A1 describes a hybrid X-ray and optical detector built from an X-ray detector by interleaving numerous optical sensor segments in a common imaging area.

US 2007/238957 A1 describes a combined x-ray and optical (light-based) tomographic imaging system that provides functional information at greater resolution than can be achieved by optical tomography alone.

EP 1715361 A1 describes a dual-modality imaging system, wherein a positron emission topography (PET) scanner for acquiring PET imaging data and at least one optical imaging detector for acquiring optical imaging data are arranged to acquire the PET imaging data and the optical imaging data of an imaged object simultaneously.

### SUMMARY OF THE INVENTION

There may be a need to provide a hybrid X-ray and optical detector with enhanced optical imaging capabilities and a simple design.

The object of the present invention is solved by the subject-matter of the independent claims, wherein further embodiments are incorporated in the dependent claims. It should be noted that the following described aspects of the invention apply also for the imaging detector, the imaging system and the method for fabricating an imaging detector.

A first aspect of the invention relates to an imaging detector for capturing optical imaging data and X-ray imaging data, as defined in independent claim 1.

The imaging detector comprises a substrate, a photosensitive sensor, an X-ray scintillator, and an array of optical component arrangements. The photosensitive sensor comprises sensor pixels distributed across the imaging detector. The X-ray scintillator is configured to convert energy of incident X-ray radiation into optical photons. Each optical component arrangement comprises at least one optical component configured for directing incident optical radiation towards the photosensitive sensor. The sensor pixels comprise optical pixels, each coupled with a respective optical component arrangement to receive the incident optical radiation, thereby generating the optical imaging data. The sensor pixels comprise X-ray pixels coupled with the X-ray scintillator to receive the converted optical photons, thereby generating the X-ray imaging data.

In other words, a common photosensitive sensor may be used on which X-ray scintillator, either pixelated or continuous, and optical components are arranged thereon. The distribution and properties of "X-ray pixels" and "optical pixels" across the detector area can flexibly be chosen and optimized for a specific hybrid imaging application, as will be explained hereafter in more detail. A manufacturing concept derived from the rapidly emerging "microLED" display technology may be used for fabricating the imaging detector.

The term "array" may be understood as a one-dimensional array or two-dimensional array.

The X-ray scintillator may be a pixelated scintillator or a continuous scintillator (or non-pixelated scintillator).

The optical component arrangement may comprise one or more optical components configured for directing incident optical radiation 26 towards the photosensitive sensor. The optical components may comprise e.g. microlens, spectral filters, one-way or semi-transparent mirrors, light guides, polarizers, diffraction gratings, gradient index lens, holographic components, optical collimators like a longish tube or cuboid, and microprisms. Besides, switchable elements, such as liquid crystal lens, liquid lens based on water and oil, or transflective liquid crystal mirror may also be used as optical components.

The photosensitive sensor may be configured for the intended hybrid imaging application. Typical examples of sensors are: a CMOS image sensor on a wafer-scale silicon substrate, a backplane array of amorphous Si TFT and photodiode pixels on a glass substrate or on a polyimide foil substrate, and a backplane array of organic TFT and photodiode pixels on a polyimide foil substrate. Large-FOV sensors can be realized by tiling multiple smaller sensors (e.g. CMOS) together. Design of X-ray pixels and optical pixels (and their photodiodes), should match with properties of the X-ray scintillator and optical components, respectively.

An optical pixel may comprise one or more photodiodes (not shown), each coupled to one or more (stacked) optical components, e.g. microlens, light guide, optical filter. At least two optical pixels may be assigned to one sensor pixel, each optical pixel thus forming a sub-pixel of the sensor pixel. Alternatively, at least two sensor pixels are assigned to one optical pixel, each sensor pixel thus forming a sub-pixel of the optical pixel. This may be advantageous for the requirement of a dynamic differentiation or resolution for optical imaging.

An X-ray pixel may comprise one or more photodiodes, each coupled to one or more (stacked) X-ray scintillator elements. At least two X-ray pixels may be assigned to one sensor pixel, each X-ray pixel thus forming a sub-pixel of the sensor pixel. Alternatively, at least two sensor pixels are assigned to one X-ray pixel, each sensor pixel thus forming a sub-pixel of the X-ray pixel. This may be advantageous for the requirement of a dynamic differentiation or resolution for X-ray imaging.

Any desired size and shape of X-ray pixels and optical pixels may be designed. Also pixels can be grouped to form an "X-ray sensor segment" or an 'optical sensor segment" in the detector field of view. In this way any optimal distribution of X-ray pixels and optical pixels across the common sensor array can be arranged for a specific imaging application. Examples are: interleaved individual pixels, interleaved sensor segments, alternating pixel lines, alternating sensor segment stripes, concentric circular (or rectangular) sensor segments, checker boards of sensor segments, and peripheral sensor segments.

According to an embodiment of the invention, at least one optical component arrangement comprises a light converging component for focusing or narrowing the incident optical radiation onto the photosensitive sensor. The light converging component is at least one selected from a microlens and an optical collimator.
The term "optical collimator" as used herein may be described as an optical component that focuses or narrows a light beam to be aligned in a different direction or reduce its cross section. For example, the optical collimator may be a longish tube or cuboid on top of the optical pixel which restricts the acceptance angle of the optical pixel.

The use of light converging components, such as microlenses or optical collimators, optionally combined with light guides, optical filters and/or lights sources advantageously enables the realization of a desired optical imaging capability. Examples are: large-field viewing, autostereoscopic imaging, three-dimensional light field imaging, time-of-flight imaging, three-dimensional light detection and ranging (LIDAR) imaging, hyperspectral imaging, and optical tomography.

According to an embodiment of the invention, the X-ray scintillator is a pixelated scintillator comprising an array of scintillator elements. The array of optical component arrangements and the array of scintillator elements are positioned with respect to each other for directing the incident optical radiation to the sensor pixels within a gap between the scintillator elements, thereby forming separate optical and X-ray pixels. Alternatively, the array of optical component arrangements and the array of scintillator elements are positioned with respect to each other for directing the incident optical radiation to the sensor pixels coupled with the X-ray scintillator, thereby forming common optical and X-ray pixels.

Thus, the present invention may offer the option to design separate sensor pixels for optical and X-ray images and hence can deliver both images simultaneously without special requirements for lighting or shutter movement, or image corrections to eliminate crosstalk between optical and X-ray images.

The present invention may offer an alternative option to design common or shared sensor pixels for optical and X-ray images. This option may be suitable to optimize properties of the hybrid detector for time-interleaved X-ray and optical imaging. Optical switches, such as a liquid crystal module, may be applied to switch its optical properties synchronously with time-interleaved X-ray and optical imaging.

According to an embodiment of the invention, at least one component arrangement comprises a light guide arranged inside the gap between the scintillator elements. The light guide is coupled with a respective light converging component for guiding the incident optical radiation towards the sensor pixels within the gap between the scintillator elements.

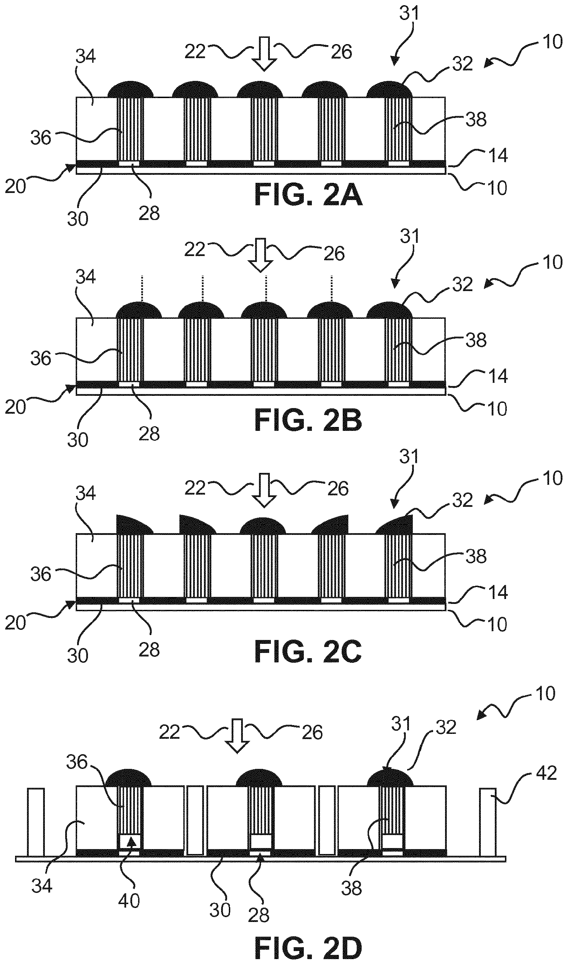

According to an embodiment of the invention, the light converging component is a microlens. The microlens has at least one of the following shapes and positions:
i) symmetrically shaped microlens in a symmetrical position relative to a respective light guide,
ii) symmetrically shaped microlens in an asymmetrical position relative to a respective light guide, and
iii) asymmetrically shaped microlens. This will be explained in more detail in the text of the embodiments of Figs. 2A to 2C.

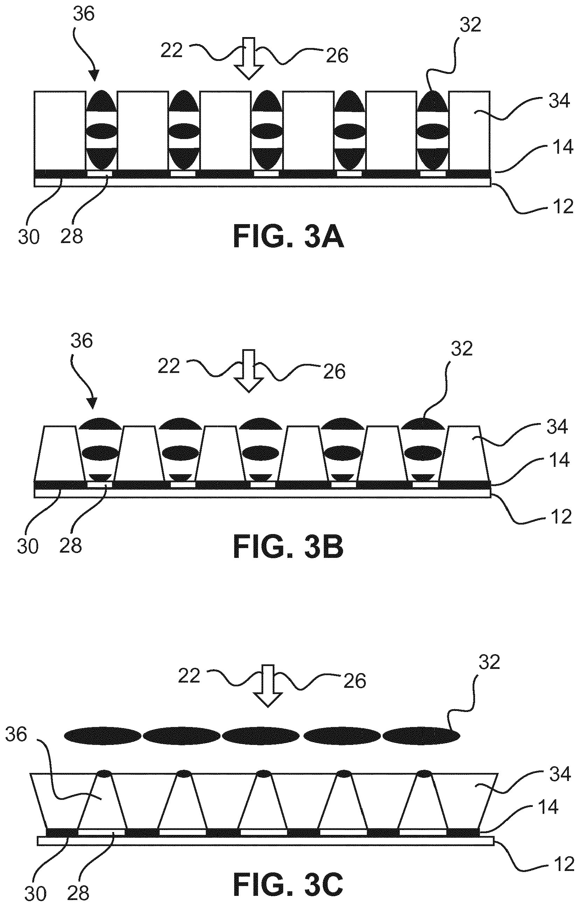

According to an embodiment of the invention, the microlens is a composite microlens. A position of the composite microlens is at least one of the following:
i) inside a gap between scintillator elements,
ii) inside a gap between trapezoid-shaped scintillator elements, and
iii) over a gap between trapezoid-shaped scintillator elements. This will be explained in more detail in the text of the embodiments of Figs. 3A to 3C.

According to an embodiment of the invention, the array of optical component arrangements and the array of scintillator elements are arranged on opposite sides of the photosensitive sensor. The photosensitive sensor is photosensitive on both sides. Each optical component arrangement is configured to direct the incident optical radiation towards one or more X-ray pixels coupled with a respective scintillator element. Alternatively, the array of optical component arrangements and the array of scintillator elements are arranged on the same side of photosensitive sensor. Each optical component arrangement is configured to direct the incident optical radiation passing through a respective scintillator element towards one or more X-ray pixels. Alternatively, at least one scintillator element has a surface shape that is configured in such a way that the at least one scintillator element itself acts as a microlens for optical imaging.

According to an embodiment of the invention, the array of scintillator elements comprises scintillator elements with:
i) different thicknesses,
ii) different sizes between scintillator elements,
iii) different sizes compared to that of the sensor pixel,
iv) different distance gaps, v) non-uniform distribution,
vi) different radiation conversion materials, and/or
vii) different composition of radiation conversion materials. The composition of the radiation conversion material is different at least in one of the following:
   a doping level of the radiation conversion material, a doping material, and a combination of doping material.

In an example, a center region of the imaging detector may have a thicker scintillator elements, whereas a non-center, e.g. periphery region, of the imaging detector may have thinner scintillator elements.

In an example, the size of scintillator elements increases from center towards periphery, thereby resulting in high spatial resolution in center and low resolution at periphery, while saving material costs of electronics.

In an example, at least two scintillator elements are assigned to one sensor pixel. Each scintillator element is coupled with a photodiode and forms an X-ray subpixel of one sensor pixel. A composition of the radiation material and/or a thickness of the radiation material may be varied between the at least two X-ray subpixels assigned to one sensor pixel. This may be used in applications like high contrast images of medical tissue of objects with very large difference in the material X-ray absorption characteristics.
In an example, at least two sensor pixels are assigned to one scintillator element. In other words, the scintillator element has a size larger than that of the sensor pixel.

In an example, a center region of the imaging detector may have a high-quality, expensive radiation conversion material, such as Csl, whereas a non-center, e.g. periphery region of the imaging detector may have a low-quality, cheap radiation conversion material, e.g. GOS.

In an example, the non-uniform distribution of the array of scintillator elements is a non-uniform distribution of the composition and/or thickness of the radiation conversion material of the scintillator elements.

In an example, the non-uniform distribution of the array of scintillator elements may be provided by a non-uniform distribution of level of pixel binning, for example 1×1, 2x2, 3x3 to 4x4 binning from a center region towards a periphery of the detector, or in general n × m binning with increasing n, m.

In an example, a center region of the imaging detector may have smaller distance gaps, whereas a non-center, e.g. periphery region, of the imaging detector may have a larger distance gaps, thereby resulting in high spatial resolution in center and low resolution at periphery, while saving material costs of electronics.

According to an embodiment of the invention, the X-ray scintillator is a continuous scintillator comprising a radiation conversion material.

According to an embodiment of the invention, at least one microlens is configured to be an optical filter for selectively transmitting light of different wavelengths.

In other words, the microlens itself can also act as an optical filter. For example, a composite microlens comprises an embedded optical filter. This may be useful in fluorescent image guided surgery for real-time visualization of tissue colored by a fluorescent dye, such as FDA-approved IndoCyanine Green (ICG). The surgeon can then work in normal room light conditions, whereas a narrow-bandwidth spectral filter in the microlens blocks largely the room light and transmits largely the light emitted by the dye. In the same way, a light guide can also act as optical filter.

According to an embodiment of the invention, a transflective optical mirror is provided. The transflective optical mirror is provided as an array of light filters, each light filter configured for blocking one or more X-ray pixels from receiving the incident optical radiation. Alternatively or additionally, the transflective optical mirror is provided as an array of optical switches, each configured for enabling the incident optical radiation received by one or more X-ray pixels to be selectively switched-on and -off synchronously with time-interleaved X-ray and optical imaging.

In an example, the transflective optical mirror is a transflective optical coating.

The use of a transflective optical mirror as optical switches may advantageously solve the problems associated with traditional optical shutters, such as correction with a light-only image to retrieve X-ray image, turning off the light (including room light) or closing a (large) optical shutter when acquiring an X-ray image.

This may advantageously enable real-time medical (e.g. in surgical, operating theater (OR)/hybrid or interventional rooms) and real-time non-medical imaging applications.

According to an embodiment of the invention, the array of optical component arrangements comprises microlenses with:
i) different focal lengths,
ii) different distance gaps;
iii) non-uniform distribution;
iv) different sizes between microlenses, and/or
v) different sizes compared to that of the sensor pixel.

The non-uniform distribution of the array of microlenses may be a non-distribution of focal lengths or sizes of the microlenses.

In an example, the non-uniform distribution of microlens may be provided by a non-uniform distribution of level of pixel binning, for example from 1×1, 2x2, 3x3 to 4x4 pixel binning from a center region towards a periphery of the detector.

In an example, at least two microlenses are assigned to one sensor pixel, each forming an optical subpixel. A focal length and/or a size may be varied between the at least two optical subpixels assigned to one sensor pixel.

In another example, at least two sensor pixels are assigned to one microlens.

In an example, the microlenses have an increasing size from center towards edges.

In an example, the microlenses have an increasing distance gap from center towards edges.

According to an embodiment of the invention, the substrate comprises a flat or a substantially flat or a curved shape. The substrate comprises silicon, glass or polymer foil.

The term "substantially flat" may be understood as a flatness comprising a minimum bend radius of up to 1 cm.

A second aspect of the invention relates to an imaging system, as defined in dependent claim 14. The imaging system comprises an imaging detector according to any one of the embodiments described above and below, an X-ray source and an optical source. The X-ray source is configured to provide X-ray radiation. The optical source is configured to provide optical radiation. The imaging detector is configured to detect the X-ray radiation to generate X-ray imaging data and to detect the optical radiation to generate optical imaging data.

A third aspect of the invention relates to a method as defined in independent claim 15 for fabricating an imaging detector for capturing optical imaging data and X-ray imaging data according to any of claims 1-13.

The method comprises the following steps: a) forming a substrate, b) forming a photosensitive sensor on the substrate, and c) arranging an X-ray scintillator and an array of optical component arrangements on the photosensitive sensor by a pick-and-place assembly transfer process and whereinthe photosensitive sensor comprises sensor pixels distributed across the imaging detector. The X-ray scintillator is configured to convert energy of incident X-ray radiation into optical photons. Each optical component arrangement comprises at least one optical component configured for directing incident optical radiation towards the photosensitive sensor. The sensor pixels comprise optical pixels, each coupled with a respective optical component arrangement to receive the incident optical radiation, thereby generating the optical imaging data. The sensor pixels comprise X-ray pixels coupled with the X-ray scintillator to receive the converted optical photons, thereby generating the X-ray imaging data.

The detector assembly process may start with separate fabrication of pixelated "donor arrays", i.e. processing a bulk scintillator substrate into an array of scintillator pieces, and manufacturing and dicing of optical microstructures on a substrate into an array of optical imaging components (e.g. microlenses on wafer, optical filters on foil). Subsequently, these donor arrays are poised for pick up and transfer of the individual pieces to an "acceptor array". This is the common photosensitive sensor on which the heterogeneous integration of all X-ray and optical imaging components to a hybrid detector occurs.

According to an aspect of the invention, an imaging detector for capturing X-ray imaging data and optical imaging data is provided. The imaging detector is characterized by a common photosensitive sensor comprising multiple photosensitive pixels and electronic circuitry for the purpose of capturing and processing images resulting from exposure to X-ray radiation and/or optical radiation.The optical radiation may be ultravioulet (UV), visible (VIS), infrared (IR), or near infrared (NIR) light. This may eliminate interconnection problems for the optical sensor components. It may also offer enhanced optical imaging capabilities, and it may reduce cost price of the detector. Realization of this simpler, more flexible and cheaper hybrid detector design may be enabled by the manufacturing assembly concept of rapidly emerging MicroLED displays.

These and other aspects of the present invention will become apparent from and be elucidated with reference to the embodiments described hereinafter.

### BRIEF DESCRIPTION OF THE DRAWINGS

A more complete appreciation of the invention and the attendant advantages thereof will be more clearly understood by reference to the following schematic drawings, which are not to scale, wherein:
Fig. 1 shows a schematic diagram of an imaging detector according to an embodiment of the invention.
Figs. 2A to 2D show a schematic diagram of an imaging detector according to an embodiment of the invention.
Figs. 3A to 3C shows a schematic diagram of an imaging detector according to further embodiments of the invention.
Fig. 4 shows a schematic diagram of an imaging detector not according to the claimed invention.
Fig. 5A to 5C show a schematic diagram of an imaging detector not according to the claimed invention.
Figs. 6A and 6B show a schematic diagram of an imaging detector not according to the claimed invention.
Fig. 7A and 7B show a schematic diagram of an imaging detector not according to the claimed invention.
Fig. 8 shows a schematic diagram of an imaging system according to an embodiment of the invention.
Fig. 9 shows a schematic diagram of a method for fabricating an imaging detector according to an embodiment of the invention.

### DETAILED DESCRIPTION OF EMBODIMENTS

The illustration in the drawings is schematically and not to scale. In different drawings, similar or identical elements are provided with the same reference numerals. Generally, identical parts, units, entities, or steps are provided with the same reference symbols in the figures.

In the drawings, each embodiment shows schematically six X-ray pixels and three to six optical pixels, but these pixels are not necessarily adjacent. They may be distributed in any desired configuration across the imaging detector.

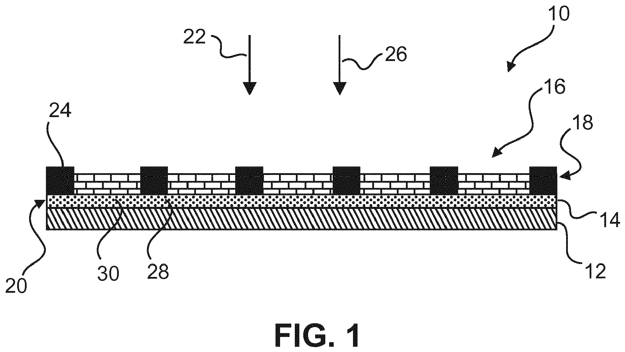

Fig. 1 shows a schematic diagram of an imaging detector 10 according to an embodiment of the invention. The imaging detector 10 comprises a substrate 12, a photosensitive sensor 14, an X-ray scintillator 16, and an array of optical component arrangements 18. The photosensitive sensor 14 comprises sensor pixels 20 distributed across the imaging detector 10. The X-ray scintillator 16 is configured to convert energy of incident X-ray radiation 22 into optical photons. Each optical component arrangement 18 comprises at least one optical component 24 configured for directing incident optical radiation 26 towards the photosensitive sensor 14. The sensor pixels 20 comprise optical pixels 28, each coupled with a respective optical component arrangement 18 to receive the incident optical radiation 26, thereby generating the optical imaging data. The sensor pixels 20 comprise X-ray pixels 30 coupled with the X-ray scintillator 16 to receive the converted optical photons, thereby generating the X-ray imaging data.

In an example, the substrate 12 comprises a flat or a substantially flat shape. In a further example, the substrate 12 comprises a curved shape. A curved detector may be useful in various situations, e.g. design of a compact X-ray, computed tomography (CT) or cone beam computed tomography (CBCT) imaging system, or imaging curved body parts. Examples are breast imaging or a flexible detector blanket (partly) covering a patient and/or in contact with a patient. The curved detector may also be useful for inspection (NDT) of industrial pipelines (gas, oil, water). The substrate 12 may comprise silicon, glass or polymer foil. The substrate with polymer foil may be enabled for example by sensor-on-foil technology.

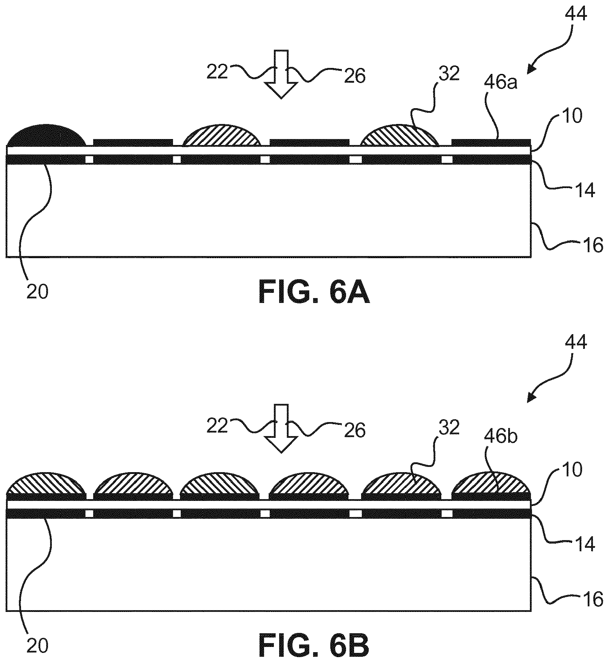

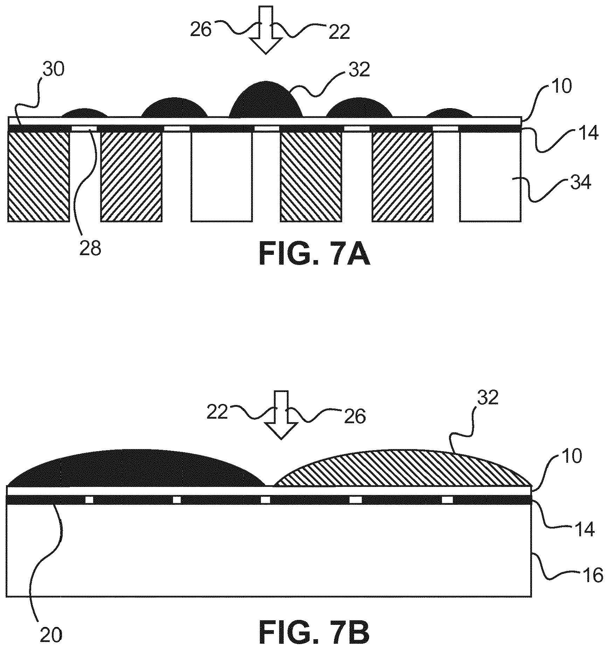

The X-ray scintillator 16 may be a pixelated scintillator or a continuous scintillator. In an example, as shown in Figs. 1 to 5 and 7A, the X-ray scintillator 16 is a pixelated scintillator. In an example, as shown in Figs. 6 and 7B, the X-ray scintillator 16 is a continuous scintillator.

In an example, at least one optical component arrangement comprises a light converging component 31(shown in Figs. 2 to 7) for focusing or narrowing the incident optical radiation 26 onto the photosensitive sensor 14. The light converging component 31 is at least one selected from a microlens 32 and an optical collimator (not shown). For simplicity, the light converging component 31 in Figs. 2 to 7 is exemplified and illustrated as a microlens 32. It will be appreciated that in some implementations the light converging element 31 may be an optical collimator, such as a longish tube or cuboid. For example, optical collimators may also be applied, instead of or addition to, the microlens 32 in Figs. 2 to 7.

In an example, as shown in Figs. 1 to 4 and Fig. 7A, the X-ray scintillator 16 is a pixelated scintillator comprising an array of scintillator elements 34. The array of optical component arrangements 18 and the array of scintillator elements 34 are positioned with respect to each other for directing the incident optical radiation 26 to the sensor pixels 20 within a gap 36 between the scintillator elements 34, thereby forming separate optical and X-ray pixels.

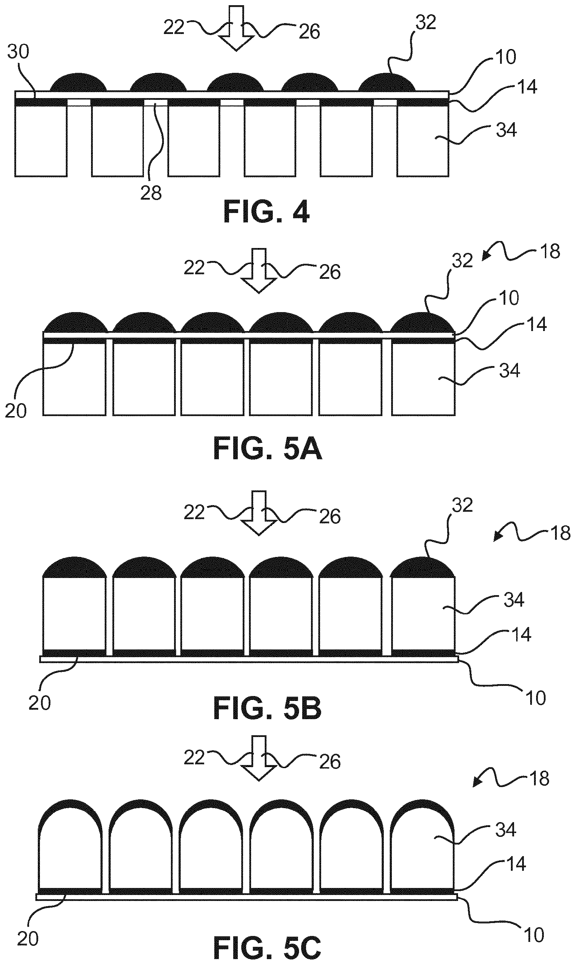

In an example, as an alternative concept, the array of optical component arrangements 18 and the array of scintillator elements 34 are positioned with respect to each other for directing the incident optical radiation 26 to the sensor pixels 20 coupled with the X-ray scintillator 16, thereby forming common optical and X-ray pixels. This concept is shown in Figs. 5A to 5C.

Figs. 2A to 2D shows a schematic diagram of an imaging detector 10 according to an embodiment of the invention. In Figs. 2A to 2D, at least one component arrangement 18 comprises a light guide 38 arranged inside the gap 36 between the scintillator elements 34. The light guide 38 is coupled with a respective light converging component 31 for guiding the incident optical radiation 26 towards the sensor pixels 20 within the gap 36 between the scintillator elements 34. For simplicity, the incident optical radiation 26 and the incident X-ray radiation 22 are illustrated as one arrow. The light converging component 31 may be a microlens 32.

In an example, as shown in Fig. 2A, the microlens 32 is a symmetrically shaped microlens in a symmetrical position relative to a respective light guide 38.
In an example, as shown in Fig. 2B, the microlens 32 is a symmetrically shaped microlens in an asymmetrical position relative to a respective light guide 38. In this example, the position of a symmetrical microlens relative to the light guide and underlying photodiode may be optimized per location on the sensor area to ensure maximum collection of incident light for each viewing angle.

In an example, as shown in Fig. 2C, the microlens 32 is an asymmetrically shaped microlens. In this example, the shape of an asymmetrical microlens relative to the light guide and underlying photodiode may be optimized per location on the sensor area to ensure maximum collection of incident light for each viewing angle.

Optionally, optical filters and/or lights sources may be provided to advantageously enable the realization of a desired optical imaging capability.

In an example, as shown in Fig. 2D, a light filter 40 is provided. The application of different filters in adjacent optical pixels may advantageously enable hyperspectral imaging of tissue. Visibility of tumor tissue in an oncology surgery procedure can be enhanced by using different contrasts of optical images in specific wavelength bands. The light filter 40 may be applied at different positions. The light filter 40 may also be applied in the layer, underneath or above the microlens 32 or the light guide 38.

Optionally, at least one microlens 32 is configured to be an optical filter for selectively transmitting light of different wavelengths. In other words, the microlens itself can also act as an optical filter. For example, a composite microlens in Figs. 3A to 3C may comprise an embedded optical filter. Optionally, the light guide 38 is configured to be an optical filter for selectively transmitting light of different wavelengths.

In an example, as shown in Fig. 2D, a light source 42 is provided in periphery and/or in the gaps 36 of the X-ray scintillator 16. The application of small light-sources, such as microLED's or vertical-cavity surface-emitting laser (VCSEL)'s at the periphery and/or inside the gaps of the X-ray scintillator may advantageously enable three-dimensional or multi-spectral imaging capabilities of the hybrid detector. For example, light sources can be configured to emit light pulses at different wavelengths synchronized with pulsed X-ray exposures of the patient in order to enable time-interleaved hybrid imaging. This means that successive light images and X-ray images are acquired rapidly after each other. Light sources can be used to add advanced three-dimensional sensing functionalities, such as an anti-collision system, to the detector by using time-of-flight (ToF) or LIDAR techniques. Various examples from consumer electronics (e.g. Kinect motion sensing, IphoneX three dimensional light camera, ToF proximity sensors, etc.) can also be used in a hybrid detector. The light sources can be used to realize dedicated illumination functions, independent of imaging or sensing. Useful examples for a surgeon in an Operating Room (OR) environment can be the generation of shadow-free lighting and the projection of relevant information on the patient (e.g. entry point for insertion of a surgical needle).

The combination of multiple light sources over a large surface (the detector) optionally combined with optical components to focus the light enables a surgical light with excellent shadow dilution properties. This enables using the detector in a surgical setting such as a Hybrid OR during the surgical procedure.

Figs. 3A to 3C show a schematic diagram of an imaging detector 10 according to further embodiments of the invention. In Figs. 3A to 3C, the microlens 32 is a composite microlens comprising a set of microlenses. In view of the X-ray scintillator thickness ranging from 100 to 1000 µm, a composite microlens may be useful to prevent light loss due to reflection/absorption phenomena in the gap between adjacent scintillator elements.

In an example, as shown in Fig. 3A, the position of the composite microlens is inside a gap 36 between scintillator elements 34.

In an example, as shown in Fig. 3B, the position of the composite microlens is inside a gap 36 between trapezoid-shaped scintillator elements 34. This may advantageously enable an increase of optical viewing angle and optical sensitivity compared to the example in Fig. 3A. The microlens needs to have a symmetric shape and may be tilted towards the boundary of the sensor to optimal correct for the oblique entrance of the optical beams.

In an example, as shown in Fig. 3C, the position of the composite microlens is over a gap 36 between trapezoid-shaped scintillator elements 34. This may advantageously enable an increase of X-ray sensitivity, while still maintaining a reasonable viewing angle and optical sensitivity compared to the example in Fig. 3A. This may be realized by using an elevated design of the microlens (e.g. in a hexagonal pixel structure) above the scintillator layer.

Fig. 4 shows a schematic diagram of an imaging detector 10. In Fig. 4, the array of optical components 18 and the array of scintillator elements 34 are arranged on opposite sides of the photosensitive sensor 14. The photosensitive sensor 14 is photosensitive on both sides. The array of optical component arrangements 18 and the array of scintillator elements 34 are positioned with respect to each other for directing the incident optical radiation 26 to the optical pixels 28 within a gap 36 between the scintillator elements 34. In this example, the sensor has dedicated sensor pixels for X-ray imaging and optical imaging, i.e. separate X-ray pixels 30 and optical pixels 28. This embodiment may advantageously increase flexibility in the choice of optical components and facilitate the manufacturing assembly process.

Figs. 5A to 5C show a schematic diagram of an imaging detector 10

In an example, as shown in Fig. 5A, the array of optical component arrangements 18 and the array of scintillator elements 34 are arranged on opposite sides of the photosensitive sensor 14. The photosensitive sensor 14 is photosensitive on both sides. Each optical component arrangement 18 is configured to direct the incident optical radiation 26 towards one or more sensor pixels 20 coupled with a respective scintillator element 34. This may be suitable to optimize properties of the hybrid detector for time-interleaved X-ray and optical imaging.

In an example, as shown in Fig.5B, the array of optical component arrangements 18 and the array of scintillator elements 34 are arranged on the same side of photosensitive sensor. Each optical component arrangement 18 is configured to direct the incident optical radiation 26 passing through a respective scintillator element 34 towards one or more sensor pixels 20 . This may be suitable to optimize properties of the hybrid detector for time-interleaved X-ray and optical imaging.

In an example, as shown in Fig. 5C, at least one scintillator element 34 has a surface shape that is configured in such a way that the at least one scintillator element 34 itself acts as a microlens for optical imaging. The adjusted scintillator surface shapes may have small impact on X-ray absorption differences of pixels. These will be taken into account by the standard gain correction of X-ray images.

In an example (not shown), the array of scintillator elements 34 of the embodiments in Figs. 1 to 5 comprises scintillator elements 34 with: i) different thicknesses, ii) different sizes between scintillator elements, iii) different sizes compared to that of the sensor pixel, iv) different distance gaps, v) non-uniform distribution, vi) different radiation conversion materials, and/or vii) different composition of radiation conversion materials. The composition of the radiation conversion material is different at least in one of the following: a doping level of the radiation conversion material, a doping material, and a combination of doping material. This may advantageously enable a dynamic differentiation or resolution for an X-ray or a CT detector.

For example, an imaging detector with a large variation of different dedicated scintillator material across the continuous scintillator may be used in applications like tissue differentiation, material detection and separation, or measurements of X-ray tube characteristics, for instance an X-ray spot size, or an X-ray spectrum, of an X-ray tube of a CT imaging system.

For example, an imaging detector with a combination of small and large X-ray scintillator elements within one sensor pixel may be used in applications like high contrast images of medical tissue or objects with very large differences in material X-ray absorption characteristics.

Figs. 6 show a schematic diagram of an imaging detector 10 with a continuous scintillator. The continuous scintillator comprises a radiation conversion material.

In an example, as shown in Figs. 6A and 6B, a transflective optical mirror 44 is provided.

In an example, as shown in Fig. 6A, the transflective optical mirror 44 is provided as an array of light filters 46a. Each light filter 46a is configured for blocking one or more X-ray pixels from receiving the incident optical radiation 26. These X-ray pixels can thus receive X-ray only and are dedicated for generating X-ray imaging data.

In a further example, as shown in Fig. 6B, the transflective optical mirror 44 is provided as an array of optical switches (46b). The optical switches 46b may be arranged between the microlens and the X-ray scintillator or integrated as a microlens module. In an example, as shown in Fig. 6B, the optical switches 46b may be arranged below all microlenses 32. This may be beneficial for a practical use for acquiring X-ray only images and optical images in room light conditions. In another example (not shown), the optical switches 46b may be arranged below a part of the microlenses. Each optical switch 46b is configured for enabling the incident optical radiation received by one or more X-ray pixels to be selectively switched-on and -off synchronously with time-interleaved X-ray and optical imaging. For example, the transflective optical mirror 44 may be a liquid crystal module, a transflective liquid crystal mirror, or a liquid crystal lens. The transflective optical mirror 44 may also be in form of a transflective optical coating. This may advantageously enable real-time imaging applications (e.g. medical imaging applications in surgical, OR/hybrid or interventional rooms). There is no need to turn off light (including room light) or to close optical shutter when acquiring the X-ray image.

The transflective optical mirror 44 may also be applied to the embodiments in Figs. 5A to 5C.

In an example, the array of optical component arrangements comprises microlenses with: i) different focal lengths, ii) different distance gaps, iii) non-uniform distribution, iv) different sizes between microlenses, and/or v) different sizes compared to that of the sensor pixel. This may advantageously create a dynamic differentiation or resolution for optical imaging.

Figs. 7A and 7B shows a schematic diagram of an imaging detector 10.

In an example, as shown in Fig. 7A, the microlenses have different focal lengths to optimize optical imaging performance. An array of microlenses with different focal lengths may advantageously enable the imaging detector to keep the focus on a series of focal lengths. Thus, the imaging detector has a series of focus distances ranging from a minimum focus distance to infinite focus distance, for example. This may be advantageously for the applications that require inspecting the whole room.

In an example, as shown in Fig. 7B, the microlenses have a size that is larger than that of the sensor pixels.

In an example (not shown), the size of the microlenses increases from center towards periphery, thereby resulting in high spatial resolution in center and low resolution at periphery.

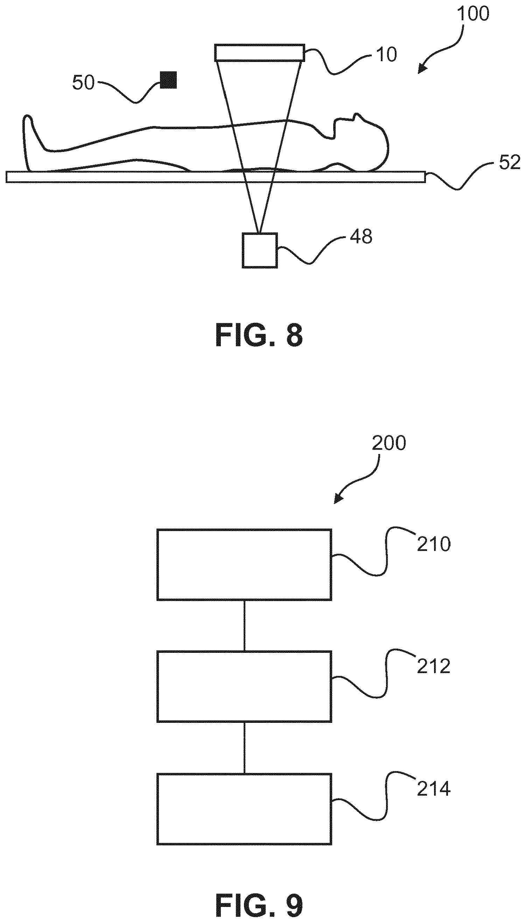

Fig. 8 shows a schematic diagram of an imaging system 100 according to an embodiment of the invention. The imaging system 100 comprises an imaging detector 10 according to one of the embodiments described above, an X-ray source 48 and an optical source 50. The X-ray source 48 is configured to provide X-ray radiation. The optical source is configured to provide optical radiation. The imaging detector 10 is configured to detect the X-ray radiation to generate X-ray imaging data and to detect the optical radiation to generate optical imaging data.

In an example, as shown in Fig. 8, the imaging system 100 is a medical imaging system. A patient support 52 may be provided to carry a patient for medical imaging. Further medical applications of the imaging system 100 may comprise: motion compensation, patient positioning, fluorescent image guided surgery, hyperspectral imaging in surgical oncology, instrument tracking, etc. The imaging system 100 may also be used for non-medical applications, such as Non Destructive Testing (NDT), food inspection and security control.

Fig. 9 shows a schematic diagram of a method 200 for fabricating an imaging detector according to an embodiment of the invention. The method comprises the following steps: In a first step 210, a substrate is formed. In a second step 212, a photosensitive sensor on the substrate. In a third step 213, an X-ray scintillator and an array of optical component arrangements is arranged on the photosensitive sensor by a pick-and-place assembly transfer process.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An imaging detector (10) for capturing optical imaging data and X-ray imaging data, comprising:
- a substrate (12);
- a photosensitive sensor (14);
- an X-ray scintillator (16); and
- an array of optical component arrangements (18);
wherein the photosensitive sensor comprises sensor pixels (20) distributed across the imaging detector;
wherein the X-ray scintillator is configured to convert energy of incident X-ray radiation (22) into optical photons; said imaging detector being **characterized in that**
each optical component arrangement comprises at least one optical component (24) configured for directing incident optical radiation (26) towards the photosensitive sensor;
wherein the sensor pixels comprise optical pixels (28), each coupled with a respective optical component arrangement to receive the incident optical radiation, thereby generating the optical imaging data; and
wherein the sensor pixels comprise X-ray pixels (30) coupled with the X-ray scintillator to receive the converted optical photons, thereby generating the X-ray imaging data.

2. Imaging detector according to claim 1,
wherein at least one optical component arrangement comprises a light converging component (31) for focusing or narrowing the incident optical radiation onto the photosensitive sensor; and
wherein the light converging component is at least one selected from a microlens (32) and an optical collimator.

3. Imaging detector according to claim 1 or 2,
wherein the X-ray scintillator is a pixilated scintillator comprising an array of scintillator elements (34); and
wherein the array of optical component arrangements and the array of scintillator elements are positioned with respect to each other for directing the incident optical radiation:
i) to the sensor pixels within a gap (36) between the scintillator elements, thereby forming separate optical and X-ray pixels; or
ii) to the sensor pixels coupled with the X-ray scintillator, thereby forming common optical and X-ray pixels.

4. Imaging detector according to claim 3,
wherein at least one component arrangement comprises a light guide (38) arranged inside the gap between the scintillator elements, optionally combined with a light filter (40) and/or a light source (42); and
wherein the light guide is coupled with a respective light converging component for guiding the incident optical radiation towards the sensor pixels within the gap between the scintillator elements.

5. Imaging detector according to claim 4,
wherein the light converging component is a microlens; and
wherein the microlens has at least one of the following shapes and positions:
i) symmetrically shaped microlens in a symmetrical position relative to a respective light guide;
ii) symmetrically shaped microlens in an asymmetrical position relative to a respective light guide; and
iii) asymmetrically shaped microlens.

6. Imaging detector according to claim 3,
wherein the microlens is a composite microlens; and
wherein a position of the composite microlens is at least one of the following:
i) inside a gap between scintillator elements;
ii) inside a gap between trapezoid-shaped scintillator elements; and
iii) over a gap between trapezoid-shaped scintillator elements.

7. Imaging detector according to claim 3,
wherein the array of optical component arrangements and the array of scintillator elements are arranged on opposite sides of the photosensitive sensor; wherein the photosensitive sensor is photosensitive on both sides; and wherein each optical component arrangement is configured to direct the incident optical radiation towards one or more X-ray pixels coupled with a respective scintillator element; or
wherein the array of optical component arrangements and the array of scintillator elements are arranged on the same side of photosensitive sensor; wherein each optical component arrangement is configured to direct the incident optical radiation passing through a respective scintillator element towards one or more X-ray pixels; or
wherein at least one scintillator element has a surface shape that is configured in such a way that the at least one scintillator element itself acts as a micro lens for optical imaging.

8. Imaging detector according to any one of claims 3 to 7,
wherein the array of scintillator elements comprises scintillator elements with:
i) different thicknesses;
ii) different sizes between scintillator elements;
iii) different sizes compared to that of the sensor pixel;
iv) different distance gaps;
v) non-uniform distribution;
vi) different radiation conversion materials; and/or
vii) different composition of radiation conversion materials; and
wherein the composition of the radiation conversion material is different at least in one of the following:
- a doping level of the radiation conversion material;
- a doping material; and
- a combination of doping material.

9. Imaging detector according to claim 1 or 2,
wherein the X-ray scintillator is a continuous scintillator comprising a radiation conversion material.

10. Image detector according to any one of claims 2 to 9;
wherein at least one microlens is configured to be an optical filter for selectively transmitting light of different wavelengths; and/or
wherein the light guide is configured to be an optical filter for selectively transmitting light of different wavelengths.

11. Imaging detector according to any one of the preceding claims,
wherein a transflective optical mirror (44) is provided;
wherein the transflective optical mirror is provided as an array of light filters (46a), each light filter configured for blocking one or more X-ray pixels from receiving the incident optical radiation; and/or
wherein the transflective optical mirror is provided as an array of optical switches (46b), each configured for enabling the incident optical radiation received by one or more X-ray pixels to be selectively switched-on and -off synchronously with time-interleaved X-ray and optical imaging.

12. Imaging detector according to any one of claims 2 to 11,
wherein the array of optical component arrangements comprises microlenses with:
i) different focal lengths;
ii) different distance gaps;
iii) non-uniform distribution;
iv) different sizes between microlenses; and/or
v) different sizes compared to that of the sensor pixel.

13. Imaging detector according to any one of the preceding claims,
wherein the substrate comprises a flat or a substantially flat or a curved shape; and
wherein the substrate comprises silicon, glass or polymer foil.

14. An imaging system (100), comprising:
- an imaging detector according claim 1;
- an X-ray source (48); and
- an optical source (50);
wherein the X-ray source is configured to provide X-ray radiation;
wherein the optical source is configured to provide optical radiation; and
wherein the imaging detector is configured to detect the X-ray radiation to generate X-ray imaging data and to detect the optical radiation to generate optical imaging data.

15. A method (200) for fabricating an imaging detector for capturing optical imaging data and X-ray imaging data according to anyone of claims 1 to 13, comprising the following steps:
a) forming (210) a substrate;
b) forming (212) a photosensitive sensor on the substrate; and
c) arranging (214) an X-ray scintillator and an array of optical component arrangements on the photosensitive sensor by a pick-and-place assembly transfer process;
wherein the photosensitive sensor comprises sensor pixels (20) distributed across the imaging detector;
wherein the X-ray scintillator is configured to convert energy of incident X-ray radiation (22) into optical photons;
wherein each optical component arrangement comprises at least one optical component (24) configured for directing incident optical radiation (26) towards the photosensitive sensor;
wherein the sensor pixels comprise optical pixels (28), each coupled with a respective optical component arrangement to receive the incident optical radiation, thereby generating the optical imaging data; and
wherein the sensor pixels comprise X-ray pixels (30) coupled with the X-ray scintillator to receive the converted optical photons, thereby generating the X-ray imaging data.

## Patentansprüche

1. Ein Bildgebungs-Detektor (10) zum Erfassen optischer Daten und Röntgen-Bildgebungsdaten, umfassend:
- ein Substrat (12);
- einen lichtempfindlichen Sensor (14);
- einen Röntgen-Szintillator (16); und
- eine Reihe von optischen Komponentenanordnungen (18); wobei der lichtempfindliche Sensor Sensorpixel (20) umfasst, die über den Bilddetektor verteilt sind; wobei der Röntgenszintillator so konfiguriert ist, dass er Energie von einfallender Röntgenstrahlung (22) in optische Photonen umwandelt; wobei der besagte Abbildungsdetektor **dadurch gekennzeichnet ist, dass** jede Anordnung optischer Komponenten mindestens eine optische Komponente (24) umfasst, die konfiguriert ist, um einfallende optische Strahlung (26) auf den lichtempfindlichen Sensor zu richten;
wobei die Sensorpixel optische Pixel (28) umfassen, die jeweils mit einer entsprechenden optischen Komponentenanordnung gekoppelt sind, um die einfallende optische Strahlung zu empfangen, wodurch die optischen Abbildungsdaten erzeugt werden; und wobei die Sensorpixel Röntgenpixel (30) umfassen, die mit dem Röntgenszintillator gekoppelt sind, um die umgewandelten optischen Photonen zu empfangen, wodurch die Röntgen-Bildgebungsdaten erzeugt werden.

2. Bildgebungsdetektor nach Anspruch 1, wobei mindestens eine Anordnung optischer Komponenten eine lichtkonvergierende Komponente (31) zum Fokussieren oder Verengen der einfallenden optischen Strahlung auf den lichtempfindlichen Sensor umfasst; und wobei die lichtkonvergierende Komponente mindestens eines ist, das aus einer Mikrolinse (32) und einem optischen Kollimator ausgewählt ist.

3. Bildgebungsdetektor nach Anspruch 1 oder 2, wobei der Röntgenszintillator ein gepixelter Szintillator ist, der eine Reihe von Szintillatorelementen (34) umfasst, und wobei die Reihe von optischen Komponentenanordnungen und die Reihe von Szintillatorelementen so gegeneinander positioniert sind, dass sie die einfallende optische Strahlung richten:
i) auf die Sensorpixel innerhalb eines Spalts (36) zwischen den Szintillatorelementen, wodurch getrennte optische und Röntgenpixel gebildet werden; oder
ii) auf die Sensorpixel, welche mit dem Röntgenszintillator gekoppelt sind, wodurch herkömmliche optische und Röntgenpixel gebildet werden.

4. Bildgebungsdetektor nach Anspruch 3, wobei mindestens eine Komponentenanordnung einen innerhalb des Spalts zwischen den Szintillatorelementen angeordneten Lichtleiter (38), optional kombiniert mit einem Lichtfilter (40) und/oder einer Lichtquelle (42), umfasst; und wobei der Lichtleiter mit einer entsprechenden lichtkonvergierenden Komponente gekoppelt ist, um die einfallende optische Strahlung zu den Sensorpixeln innerhalb des Spalts zwischen den Szintillatorelementen zu leiten.

5. Bildgebungsdetektor nach Anspruch 4, wobei die lichtkonvergierende Komponente eine Mikrolinse ist; und wobei die Mikrolinse wenigstens eine der folgenden Formen und Positionen hat:
i) eine symmetrisch geformte Mikrolinse in einer symmetrischen Position relativ zu einem entsprechenden Lichtleiter;
ii) eine symmetrisch geformte Mikrolinse in einer asymmetrischen Position relativ zu einem entsprechenden Lichtleiter; und
iii) eine asymmetrisch geformte Mikrolinse.

6. Bildgebungsdetektor nach Anspruch 3, wobei die Mikrolinse eine Komposit-Mikrolinse ist; und wobei die Position der Mikrolinse wenigstens eine der folgenden ist:
i) innerhalb eines Spalts zwischen den Szintillatorelementen;
ii) innerhalb eines Spalts zwischen den trapezförmigen Szintillatorelementen; und
iii) über einem Spalt zwischen den trapezförmigen Szintillatorelementen.

7. Bildgebungsdetektor nach Anspruch 3, wobei die Reihe aus optischen Komponentenanordnungen und die Reihe aus Szintillatorelementen auf gegenüberliegenden Seiten des lichtempfindlichen Sensors angeordnet sind; wobei der lichtempfindliche Sensor auf beiden Seiten lichtempfindlich ist; und wobei jede optische Komponentenanordnung so konfiguriert ist, dass sie die einfallende optische Strahlung auf ein oder mehrere Röntgenpixel lenkt, die mit einem jeweiligen Szintillatorelement gekoppelt sind; oder wobei die Reihe aus optischen Komponentenanordnungen und die Reihe aus Szintillatorelementen auf der gleichen Seite des lichtempfindlichen Sensors angeordnet sind; wobei jede optische Komponentenanordnung so konfiguriert ist, dass sie die einfallende optische Strahlung, die durch ein entsprechendes Szintillatorelement hindurchgeht, zu einem oder mehreren Röntgenpixeln lenkt; oder wobei mindestens ein Szintillatorelement eine Oberflächenform aufweist, die derart konfiguriert ist, dass das mindestens eine Szintillatorelement selbst als Mikrolinse für die optische Bildgebung wirkt.

8. Bildgebungsdetektor nach einem der Ansprüche 3 bis 7, wobei die Reihe von Szintillatorelementen Szintillatorelemente umfasst mit:
i) verschiedenen Dicken;
ii) verschiedenen Größen zwischen den Szintillatorelementen;
iii) verschiedenen Größen im Vergleich zu der des Sensorpixels;
iv) Spalten von unterschiedlicher Entfernung;
v) nicht gleichförmiger Verteilung;
vi) verschiedenen Strahlungskonversions-Materialien; und/oder
vii) verschiedenen Zusammensetzungen von Strahlenkonversions-Materialien; und wobei die Zusammensetzung der Strahlenkonversions-Materialien verschieden ist in wenigstens einem der folgenden:
- Eine Doping-Stufe des Strahlenkonversions-Materials;
- Ein Doping-Material; und
- Eine Kombination von Doping-Material.

9. Bildgebungsdetektor nach Anspruch 1 oder 2, wobei der Röntgenszintillator ein kontinuierlicher Szintillator ist, der ein Strahlungskonversions-Material umfasst.

10. Bilddetektor nach einem der Ansprüche 2 bis 9; wobei mindestens eine Mikrolinse als optischer Filter zum selektiven Durchlassen von Licht unterschiedlicher Wellenlängen konfiguriert ist; und/oder wobei der Lichtleiter so konfiguriert ist, dass er ein optischer Filter zum selektiven Übertragen von Licht unterschiedlicher Wellenlängen ist.

11. Bilddetektor nach einem der vorhergehenden Ansprüche, wobei ein transflektiver optischer Spiegel (44) vorhanden ist; wobei der transflektive optische Spiegel als eine Reihe von Lichtfiltern (46a) bereitgestellt ist, wobei jeder Lichtfilter so konfiguriert ist, dass er ein oder mehrere Röntgenpixel daran hindert, die einfallende optische Strahlung zu empfangen; und/oder wobei der transflektive optische Spiegel als eine Reihe von optischen Schaltern (46b) vorgesehen ist, die jeweils so konfiguriert sind, dass die von einem oder mehreren Röntgenpixeln empfangene einfallende optische Strahlung synchron mit der zeitverschachtelten Röntgen- und optische Bildgebung selektiv ein- und ausgeschaltet wird.

12. Bildgebungsdetektor nach einem der Ansprüche 2 bis 11, wobei die Reihe von optischen Komponentenanordnungen Mikrolinsen umfasst mit:
i) verschiedenen fokalen Längen;
ii) Spalten von unterschiedlicher Entfernung;
iii) nicht gleichförmige Verteilung;
iv) verschiedene Größen zwischen Mikrolinsen; und/oder
v) verschiedenen Größen im Vergleich zu der des Sensorpixels.

13. Bildgebungsdetektor nach einem der vorigen Ansprüche, wobei das Substrat eine flache oder im Wesentlichen flache Oberfläche oder eine gebogene Form umfasst;
und wobei das Substrat Silikon, Glas oder Polymerfolie umfasst.

14. Ein Bildgebungssystem (100), umfassend:
- einen Bildgebungsdetektor nach Anspruch 1;
- eine Röntgenquelle (48); und
- eine optische Quelle (50);
wobei die Röntgenquelle so konfiguriert ist, dass sie Röntgenstrahlung bereitstellt; wobei die optische Quelle dazu konfiguriert ist, optische Strahlung bereitzustellen; und wobei der Bildgebungsdetektor konfiguriert ist, um die Röntgenstrahlung zu erfassen, um Röntgenbildgebungsdaten zu erzeugen, und um die optische Strahlung zu erfassen, um optische Bildgebungsdaten zu erzeugen.

15. Ein Verfahren (200) zur Herstellung eines Bildgebungsdetektors zum Erfassen optischer Bildgebungsdaten und Röntgen-Bildgebungsdaten nach einem beliebigen der Ansprüche 1 bis 13, es umfasst die folgenden Schritte:
a) Bildung (210) eines Substrats;
b) Bildung (212) eines lichtempfindlichen Sensors auf dem Substrat; und
c) Anordnen (214) eines Röntgenstrahl-Szintillators und einer Reihe von optischen Komponentenanordnungen auf dem lichtempfindlichen Sensor durch einen Pick-and-Place-Montage-Transferprozess; wobei der lichtempfindliche Sensor Sensorpixel (20) umfasst, die über den Bilddetektor verteilt sind; wobei der Röntgenszintillator so konfiguriert ist, dass er Energie von einfallender Röntgenstrahlung (22) in optische Photonen umwandelt; wobei jede Anordnung optischer Komponenten mindestens eine optische Komponente (24) umfasst, die dazu konfiguriert ist, einfallende optische Strahlung (26) auf den lichtempfindlichen Sensor zu richten;
wobei die Sensorpixel optische Pixel (28) umfassen, die jeweils mit einer entsprechenden optischen Komponentenanordnung gekoppelt sind, um die einfallende optische Strahlung zu empfangen, wodurch die optischen Abbildungsdaten erzeugt werden; und wobei die Sensorpixel Röntgenpixel (30) umfassen, die mit dem Röntgenszintillator gekoppelt sind, um die umgewandelten optischen Photonen zu empfangen, wodurch die Röntgen-Bildgebungsdaten erzeugt werden.

## Revendications

1. Un détecteur d'imagerie (10) pour saisir des données d'imagerie optique et des données d'imagerie à rayons X, comprend:
- un substrat (12);
- un capteur photosensible (14);
- un scintillateur à rayons X (16); et
- un réseau d'arrangement de composants optiques (18); où le capteur photosensible comprend des pixels de capteur (20) répartis sur le détecteur d'imagerie; où le scintillateur à rayons X est configuré pour convertir l'énergie du rayonnement incident aux rayons X (22) en photons optiques; ledit détecteur d'imagerie étant **caractérisé par le fait que** chaque arrangement de composant optique comprend au moins un composant optique (24) configuré pour diriger le rayonnement optique incident (26) vers le capteur photosensible; où les pixels de capteur comprennent des pixels optiques (28), chacun couplé avec un arrangement de composants optiques respectifs pour recevoir un rayonnement optique incident, générant ainsi des données d'imagerie optiques; et
où les pixels de capteur comprennent des pixels à rayons X (30), chacun couplé avec un scintillateur pour recevoir les photons optiques convertis, générant ainsi des données d'imagerie à rayons X.

2. Le détecteur d'imagerie selon la revendication 1, où au moins un arrangement de composant optique comprend une composante de convergence de lumière (31) pour focaliser ou rétrécir le rayonnement optique incident sur le capteur photosensible; et où la composante de convergence de lumière représente au moins un élément sélectionné à partir d'une microlentille (32) et un collimateur optique.

3. Le détecteur d'imagerie selon la revendication 1 ou 2, où le scintillateur à rayons X est un scintillateur pixélisé comprenant un réseau d'éléments scintillateurs (34); et où le réseau d'arrangement de composant optique et l'arrangement d'éléments scintillateurs sont positionnés les uns par rapport aux autres pour diriger le rayonnement optique incident:
i) vers les pixels du capteur dans un intervalle (36) entre les éléments scintillateurs, formant ainsi des pixels optiques et des rayons X séparés; ou
ii) vers les pixels du capteur couplé avec le scintillateur à rayons X, formant ainsi des pixels optiques et à rayons X courants.

4. Le détecteur d'imagerie selon la revendication 3, où au moins un arrangement à un seul composant comprend un guide de lumière (38) disposé dans l'intervalle entre les éléments scintillateurs, éventuellement combinés avec un filtre de lumière (40) et une source de lumière (42); et où le guide de lumière est couplé à une composante de convergence de lumière respective pour diriger le rayonnement optique incident vers les pixels de capteur dans l'intervalle entre les éléments scintillateurs.

5. Le détecteur d'imagerie selon la revendication 4, où la composante de convergence de lumière est une microlentille; et où la microlentille possède au moins une des formes et positions suivantes:
i) une microlentille de forme symétrique dans une position symétrique par rapport à un guide de lumière respectif;
ii) une microlentille de forme symétrique dans une position asymétrique par rapport à un guide de lumière respectif; et
iii) une microlentille de forme asymétrique.

6. Le détecteur d'imagerie selon la revendication 3, où la microlentille est une microlentille composite; et où la position de la microlentille composite est au moins l'un des éléments suivants:
i) dans un intervalle entre les éléments scintillateurs;
ii) dans un intervalle entre les éléments scintillateurs de forme trapézoïdale; et
iii) sur un intervalle entre les éléments scintillateurs de forme trapézoïdale.

7. Le détecteur d'imagerie selon la revendication 3, où le réseau d'arrangement de composant optique et le réseau d'éléments scintillateurs sont situés sur les côtés opposés d'un capteur photosensible; où le capteur photosensible est photosensible sur les deux côtés; et où chaque arrangement de composant optique est configuré pour diriger le rayonnement optique incident vers un ou plusieurs pixels à rayons X couplé avec un élément scintillateur respectif; ou
où le réseau d'arrangement de composant optique et le réseau d'éléments scintillateurs sont situés sur le même côté du capteur photosensible; où chaque arrangement de composant optique est configuré pour diriger le rayonnement optique incident en passant par un élément scintillateur respectif vers un ou plusieurs pixels à rayons X; ou
où au moins un élément scintillateur possède une forme de surface qui est configurée de telle sorte qu'au moins élément scintillateur lui-même agit en tant qu'une microlentille pour l'imagerie optique.

8. Le détecteur d'imagerie selon l'une quelconque des revendications 3 à 7, où le réseau d'éléments scintillateurs comprend des éléments scintillateurs avec:
i) des épaisseurs différentes;
ii) des tailles différentes entre des éléments scintillateurs;
iii) des tailles différentes comparées par rapport à celles du pixel de capteur;
iv) des écarts de distance différents;
v) une distribution non uniforme;
vi) différents matériaux de conversion de rayonnement; et
vii) différentes compositions de matériaux de conversion de rayonnement; et
où la composition de matériaux de conversion de rayonnement est différente dans au moins un des éléments suivants:
- un niveau de dopage de matériaux de conversion de rayonnement;
- un niveau de dopage; et
- une combinaison de matériaux de dopage.

9. Le détecteur d'imagerie selon la revendication 1 ou 2, où le scintillateur à rayons X est un scintillateur continu comprend un matériau de conversion du rayonnement.

10. Le détecteur d'imagerie selon l'une quelconque des revendications 2 à 9;
où au moins une microlentille est configurée pour un être un filtre optique de manière sélective pour transmettre la lumière de différentes longueurs d'onde; et
où un guide de lumière est configuré pour un être un filtre optique de manière sélective pour transmettre la lumière de différentes longueurs d'onde.

11. Le détecteur d'imagerie selon l'une quelconque des revendications quelconques, où un miroir optique transflectif (44) est fourni; où le miroir optique transflectif est fourni comme un réseau de filtres à lumière (46a), chaque filtre de lumière est configuré pour empêcher un ou deux pixels à rayons X de recevoir le rayonnement optique incident; et où le miroir optique transflectif est fourni en tant que réseau de commutateurs optiques (46b), chacun étant configuré pour permettre le rayonnement optique incident reçu par un ou plusieurs pixels pour être activé et désactivé de manière sélective simultanément avec des rayons X entrelacés dans le temps et l'imagerie optique.

12. Le détecteur d'imagerie selon l'une quelconque des revendications 2 à 11, où le réseau d'arrangement de composants optiques comprend des microlentilles avec:
i) des longueurs focales différentes;
ii) des intervalles de distance différents;
iii) une distribution non uniforme;
iv) différentes tailles entre les microlentilles; et
v) des tailles différentes comparées par rapport à celles du pixel de capteur.

13. Le détecteur d'imagerie selon l'une quelconque des revendications précédentes, où le substrat comprend une forme sensiblement plate ou incurvée;
et
où le substrat comprend du silicium, du verre ou une feuille polymère.

14. Un système d'imagerie (100) comprend:
- un détecteur d'imagerie selon la revendication 1;
- une source de rayons X (48); et
- une source optique (50);
où la source de rayons X est configurée pour fournir un rayonnement aux rayons X;
où la source optique est configurée pour fournir un rayonnement optique; et
où le détecteur d'imagerie est configuré pour détecter le rayonnement aux rayons X pour générer des données d'imagerie par rayons X et pour détecter le rayonnement optique pour générer des données d'imagerie optique.

15. Une méthode (200) pour fabriquer un détecteur d'imagerie pour la capture des données d'imagerie et des données d'imagerie à rayons X selon l'une quelconque des revendications 1 à 13, comprenant les étapes suivantes:
a) la formation (210) d'un substrat;
b) la formation (212) d'un capteur photosensible sur le substrat; et
c) l'arrangement (214) d'un scintillateur à rayons X et d'un réseau d'arrangements de composants optiques sur le capteur photosensible par un procédé de transfert d'assemblage de type pick-and-place;
où le capteur photosensible comprend des pixels de capteur (20) répartis sur le détecteur d'imagerie;
où le scintillateur à rayons X est configuré pour convertir l'énergie du rayonnement incident aux rayons X (22) en photons optiques;
chaque arrangement de composants optiques comprend au moins un composant optique (24) configuré pour diriger le rayonnement optique incident (26) vers le capteur photosensible;
où les pixels de capteur comprennent des pixels optiques (28), chacun couplé avec un arrangement de composants optiques respectifs pour recevoir un rayonnement optique incident, générant ainsi des données d'imagerie optiques; et
où les pixels de capteur comprennent des pixels à rayons X (30), couplés avec un scintillateur à rayons X pour recevoir les photons optiques convertis, générant ainsi des données d'imagerie à rayons X.
